# FASCICULE DE BREVET EUROPEEN

(11) **EP 4 078 165 B1**
(45) Date de publication et mention de la délivrance du brevet: **15.07.2026**
(21) Numéro de dépôt: 20821291.0
(22) Date de dépôt: 15.12.2020
(51) Int. Cl.: G01N 29/04, B29C 64/393, B29C 64/153, G01N 29/44, G01N 29/34, G01N 29/26, G01N 29/24, G01N 29/14, G01N 29/12, G01N 29/06, G01M 7/02, B29C 64/188, B33Y 10/00, B33Y 40/20, B33Y 50/02, G01M 7/00

(54) **PROCEDE DE CARACTERISATION DE L'INTEGRITE D'UN OBJET SOUMIS A UNE CONTRAINTE MECANIQUE, THERMIQUE OU THERMOELASTIQUE SUSCEPTIBLE DE GENERER DES ONDES ELASTIQUES DANS L'OBJET**
VERFAHREN ZUM CHARAKTERISIEREN DER INHALTLICHKEIT EINES OBJEKTS, DAS EINEM MECHANISCHEN, THERMISCHEN ODER THERMOELASTISCHEN STRESS AUSGESETZT IST, DER IN DEM OBJEKT ELASTISCHE WELLEN ERZEUGEN KANN
METHOD FOR CHARACTERISING THE INTEGRITY OF AN OBJECT SUBJECTED TO A MECHANICAL, THERMAL OR THERMOELASTIC STRESS LIABLE TO GENERATE ELASTIC WAVES IN THE OBJECT

(30) Priorité: 20.12.2019 FR 1915352
(43) Date de publication de la demande: 26.10.2022
(73) Titulaire: Commissariat à l'Energie Atomique et aux Energies Alternatives, 75015 Paris (FR)
(72) Inventeur: MESNIL, Olivier, 91400 ORSAY (FR); LAURENT, Jérôme, 75018 PARIS (FR)
(74) Mandataire: Atout PI Laplace
(86) Numéro de dépôt international: PCT/EP2020/086223
(87) Numéro de publication internationale: WO 2021/122599

(56) Documents cités:
- EP-A1- 3 474 009
- WO-A1-2019/236108
- CASTELLINI P ET AL: "Laser Doppler Vibrometry: Development of advanced solutions answering to technology's needs", MECHANICAL SYSTEMS AND SIGNAL PROCESSING, ELSEVIER, AMSTERDAM, NL, vol. 20, no. 6, 1 August 2006 (2006-08-01), pages 1265 - 1285, XP024930378, ISSN: 0888-3270, [retrieved on 20060801], DOI: 10.1016/J.YMSSP.2005.11.015
- RIKESH PATEL ET AL: "Imaging Material Texture of As-Deposited Selective Laser Melted Parts Using Spatially Resolved Acoustic Spectroscopy", APPLIED SCIENCES, vol. 8, no. 10, 19 October 2018 (2018-10-19), pages 1991, XP055718342, DOI: 10.3390/app8101991
- CHAITANYA BAKRE ET AL: "Influence of surface roughness from additive manufacturing on laser ultrasonics measurements", AIP CONFERENCE PROCEEDINGS, vol. 2102, 1 January 2019 (2019-01-01), NEW YORK, US, pages 020009, XP055718346, ISSN: 0094-243X, DOI: 10.1063/1.5099713
- ROMAN TOKMASHEV ET AL: "Experimental validation of the topological sensitivity approach to elastic-wave imaging", INVERSE PROBLEMS, INSTITUTE OF PHYSICS PUBLISHING, BRISTOL, GB, vol. 29, no. 12, 11 November 2013 (2013-11-11), pages 125005, XP020253816, ISSN: 0266-5611, [retrieved on 20131111], DOI: 10.1088/0266-5611/29/12/125005

## Description

L'invention se rapporte à un procédé de caractérisation de l'intégrité d'un objet, en particulier pour la détection de défaut dans un objet soumis à une contrainte mécanique, thermique ou thermoélastique susceptible de générer des ondes élastiques dans l'objet. L'invention se rapporte également à un système apte à mettre en œuvre le procédé, ainsi qu'à un procédé de fabrication additive d'un objet. L'invention est particulièrement adaptée à la caractérisation d'objets ayant une forte rugosité, en particulier les objets issus d'un processus de fabrication additive. Dans le cadre de la présente invention, la notion « d'objet » n'est pas limitative quant à sa taille, l'invention s'applique également à des structures telles que des canalisations, ou des structures aéronautiques.

Durant le processus de fabrication d'un objet, ou bien durant son utilisation, il est important de contrôler l'intégrité de l'objet. Le contrôle d'intégrité consiste à vérifier si l'objet est défectueux, soit dès la fabrication de l'objet, soit en raison de son utilisation (par exemple une fissure).

Parmi les procédés de caractérisation de l'intégrité d'un objet, les procédés de contrôle non destructif (CND) permettent avantageusement d'inspecter un objet sans les dégrader.

Il est connu d'effectuer un contrôle non destructif par des procédés de mesure de vibrations sans contact. Pour cela, l'objet à inspecter est soumis à une contrainte thermique, thermoélastique (également appelée photothermique, optoacoustique) ou mécanique, qui génère des ondes élastiques (des ondes ultrasonores).

On distingue habituellement deux types de procédés de mesure de vibrations sans contact : le mode dit passif, et le mode dit actif.

Dans le mode passif, on entend par :
- « contraintes thermiques », les contraintes liées au processus de solidification, ainsi les contraintes résiduelles lors d'un processus de fabrication additive ;
- « contraintes thermoélastiques », les ondes élastiques qui sont induites par un laser, que l'on nomme également effet optoacoustique ou photothermique ;
- « contraintes mécaniques », les contraintes liées à une fissure qui s'ouvre ou se referme lors du refroidissement suite à un processus de fabrication additive, ainsi que les contraintes liées à un manque de fusion (par exemple des contraintes résiduelles) lors d'un processus de fabrication additive.

Dans le mode actif, on entend par :
- « contraintes thermoélastiques » ou « contraintes thermiques », l'application d'un faisceau laser pulsé à la surface de l'objet. L'énergie thermique est absorbée à la surface, ce qui provoque une rapide expansion et contraction d'un petit volume autour de la surface, générant ainsi des ondes élastiques ;
- « contraintes mécaniques », l'application de courant de Foucault (technologie EMAT pour ElectroMagnetic Acoustic Transducer) ou la génération de vibrations par des transducteurs piezoélectriques aériens ou en contact avec l'objet, ou par des transducteurs capacitifs (technologie cMUTs pour Capacitive Micromachined Ultrasound Transducers).

La mesure des ondes élastiques est effectuée par un dispositif de métrologie optique, par exemple un vibromètre laser, qui émet un faisceau laser sur un point à la surface de l'objet. Le faisceau laser est réfléchi à la surface de l'objet, le dispositif de métrologie optique reçoit le faisceau réfléchi. En raison de la propagation des ondes élastiques dans l'objet, la fréquence du faisceau réfléchi est différente de celle du faisceau émis (effet Doppler). Le dispositif de métrologie optique mesure l'évolution temporelle de la vibration, qui peut être transitoire ou monochromatique. Puis, l'opération est répétée sur une pluralité de points à la surface de l'objet. On obtient ainsi une cartographie des ondes élastiques se propageant dans l'objet. La cartographie des endroits de l'objet où peuvent se situer d'éventuels défauts peut être dynamique, sous forme de séquence vidéo, ou statique.

L'état de la surface de l'objet, en particulier sa rugosité a néanmoins une forte influence sur la qualité de la mesure.

Les objets produits par fabrication additive ont une forte rugosité. La forte rugosité peut être liée :
- à la granulométrie par poudres, notamment dans le cadre des méthodes de fusion sélective par laser (SLM) ou de dépôt de matière sous énergie (DED), et/ou
- aux caractéristiques intrinsèques du procédé de fabrication additive, notamment pour les procédés de fabrication additive arc fil (WAAM).

L'état de surface modifie la réflexion du laser de mesure sur l'échantillon. Dans des conditions idéales, c'est-à-dire avec un laser sonde orthogonal à une surface de mesure, la totalité de l'intensité lumineuse u signal laser sera retournée au dispositif de métrologie, ce qui assurera une bonne mesure. Cette condition est bien sûr impossible à respecter en pratique. Sur une surface inclinée, la majorité du signal réfléchi est perdue. De manière générale, on cherchera pour ce type de mesure à avoir une surface aussi orthogonale que possible au laser de mesure. Cependant, le laser a un diamètre de spot, c'est-à-dire une zone de mesure sur laquelle il réalise la mesure, typiquement de l'ordre de quelques dizaines de microns. De plus, la surface de mesure n'est jamais plane, en particulier pour des objets rugueux, tels que ceux issus de la fabrication additive, ou bien encore des métaux corrodés (la corrosion n'étant ici pas vue comme étant un défaut à inspecter), ou encore des matériaux composites.

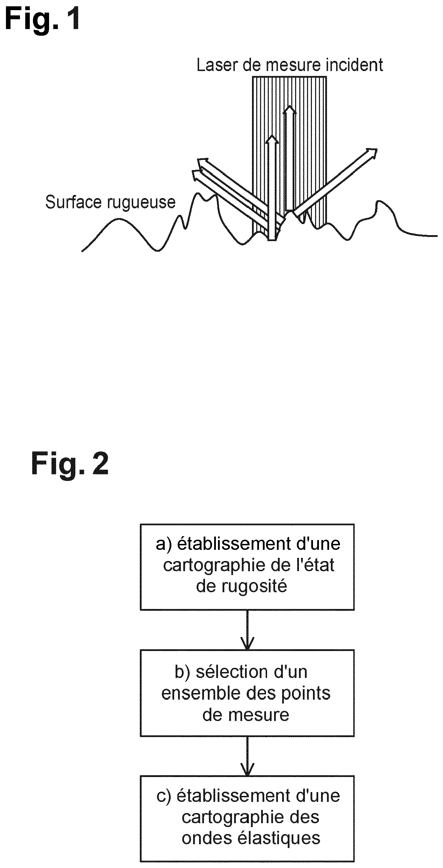

La Figure 1 illustre ce qui se passe au niveau micrométrique lors de la réflexion d'un faisceau laser à la surface d'un objet rugueux. Le faisceau laser est diffusé dans toutes les directions par la rugosité de la surface réfléchissante. Ce phénomène est appelé réflexion diffuse (speckle, ou tavelure), par opposition à la réflexion spéculaire produite par une surface parfaitement lisse. Les flèches représentent quelques trajets de réflexion du laser. L'intensité lumineuse revenant au dispositif de métrologie, coïncidant avec le laser source, est donc plus faible. Les mesures ultrasonores, effectuées pour établir la cartographie, sont donc de qualités très inégales en fonction de la rugosité locale.

Dans le document « Influence of surface roughness from additive manufacturing on laser ultrasonics measurements » (Bakre, Chaitanya, Mostafa Hassanian, and Cliff Lissenden, AIP Conference Proceedings. 2102(1). AIP Publishing, 2019), les auteurs étudient l'influence de la rugosité dans des échantillons de fabrication additive lors de mesure ultrasonore. La conclusion de ce document est que la rugosité est effectivement problématique. Toutefois, aucune solution concrète n'est proposée, mais plutôt une notion du choix des paramètres de travail pour limiter les effets de la rugosité.

Le document « Laser Doppler Vibrometry : Development of advanced solutions answering to technology's needs », Castellini et al., Mechanical Systems and Signal Processing, ELSEVIER, vol. 20, no. 6, 1 août 2006, décrit différentes applications de la vibrométrie par laser Doppler. Le document « Imaging Material Texture of As-Deposited Selective Laser Melted Parts Using Spatially Resolved Acoustic Spectroscopy », Rikesh Patel et al., Applied Sciences, vol. 8, no. 10, 19 octobre 2018, décrit l'utilisation de la spectroscopie acoustique à résolution spatiale (SRAS) dans les process de fabrication additive. Le document « Influence of surface roughness from additive manufacturing on laser ultrasonics measurements », Chaitany Bakre et al., AIP Conference Proceedings, vol. 2102, 1 janvier 2019, présente le problème de rugosité des surfaces des objets obtenus par fabrication additive, pour effectuer les mesures par vibrométrie laser.

L'invention vise donc à caractériser, de façon non destructive, c'est-à-dire non invasive, l'intégrité d'un objet ayant une forte rugosité.

Un objet de l'invention est donc un procédé de caractérisation de l'intégrité d'un objet soumis à une contrainte mécanique, thermique ou thermoélastique susceptible de générer des ondes élastiques dans l'objet tel que défini par les revendications 1 à 4.

L'invention se rapporte aussi à un système tel que défini par les revendications 5 à 8, configuré pour la caractérisation de l'intégrité d'un objet soumis à une contrainte mécanique, thermique ou thermoélastique susceptible de générer des ondes élastiques dans l'objet.

L'invention se rapporte aussi à un procédé de fabrication additive tel que défini par les revendications 9 et 10.

D'autres caractéristiques, détails et avantages de l'invention ressortiront à la lecture de la description faite en référence aux dessins annexés donnés à titre d'exemple et qui représentent, respectivement :
[Fig. 1] La figure 1, déjà décrite, illustre le phénomène de réflexion diffuse ;
[Fig. 2] La figure 2 illustre les différentes étapes du procédé de caractérisation selon l'invention ;
[Fig. 3] La figure 3 illustre un système apte à mettre en œuvre le procédé de caractérisation selon l'invention ;
[Fig. 4] La figure 4 illustre un exemple de dispositif de déplacement ;
[Fig. 5] La figure 5 illustre un exemple de cartographie de réflectivité ;
[Fig. 6] La figure 6 illustre la cartographie des ondes élastiques, obtenue avec le procédé de caractérisation selon l'invention ;
[Fig. 7] La figure 7 illustre une vue en détail de la figure 6.

Le procédé de caractérisation selon l'invention est décrit en référence à la figure 2.

Dans une première étape a), une cartographie de réflectivité est établie. La cartographie de de réflectivité est établie sur la surface de l'objet pour laquelle on établira ensuite la cartographie des ondes élastiques. La cartographie de réflectivité est une indication de la rugosité de la surface de l'objet.

La cartographie de réflectivité est établie par un dispositif de métrologie optique, qui est avantageusement le même que celui utilisé pour l'étape ultérieure d'établissement de la cartographie des ondes élastiques.

En effet, certains dispositifs de métrologie optique disposent d'une information relative à l'amplitude de l'intensité lumineuse rétrodiffusée, indépendamment de toute mesure d'effet Doppler.

Il pourrait néanmoins être envisagé d'employer deux dispositifs différents, un pour établir la cartographie de réflectivité, et un pour établir la cartographie des ondes élastiques.

Dans la première étape a), on réalise un premier balayage « rapide » de la surface de l'objet à caractériser. Ce balayage est dit rapide car, contrairement au balayage effectué pour établir la cartographie des ondes élastiques, il ne nécessite pas de mesurer l'évolution temporelle des vibrations de chaque point.

La cartographie de réflectivité représente une valeur du retour d'intensité lumineuse rétrodiffusée du dispositif de métrologie optique, à savoir une métrique interne au laser liée à l'énergie optique reçue sur le récepteur (photodiode ou photo-détecteur bas bruit large bande).

Dans la suite de la description, on considèrera que le dispositif de métrologie optique est un vibromètre laser monopoint à effet Doppler, appelé ci-après vibromètre. Le vibromètre comprend une source laser de longueur d'onde 1550 nm et un interféromètre de type Mach-Zehnder. L'interféromètre permet de mesurer l'effet Doppler (ou effet Doppler-Fizeau) dû à la modulation entre le faisceau laser émis et celui qui est réfléchi. On en déduit ainsi la fréquence et la phase d'une vibration. Une unité de calcul disposée dans le vibromètre détermine ensuite la vitesse, ou par intégration, le déplacement du point provoqué par une contrainte mécanique , thermique ou par effet thermoélastique.

Le dispositif de métrologie optique pourrait être plus simplement :
- un interféromètre hétérodyne de Mach-Zehnder, qui peut mesurer directement un déphasage entre le faisceau réfléchi et le faisceau émis ;
- un interféromètre de Fabry-Perot;
- un interféromètre de mélange à deux ondes employant un cristal photoréfractif;
- un interféromètre homodyne employant un multi-détecteur;
- un interféromètre mettant en œuvre une méthode holographique ou d'interférométrie de speckle;
- un vibromètre à effet Doppler utilisant une longueur d'onde IR à 1550 nm.

Puis, une unité de calcul, connectée à l'interféromètre serait de la même manière à même de mesurer un déplacement du point.

L'étape a) peut être mise en œuvre selon deux modes de réalisation.

Selon un premier mode de réalisation, l'étape a) comprend les sous-étapes suivantes :
Dans une première sous-étape a1), on place le dispositif de métrologie optique face à la surface de l'objet. La distance entre le dispositif de métrologie et la surface n'a pas d'importance, mais reste imposé par les contraintes d'application. La distance entre le dispositif de métrologie et la surface dépend toutefois des dimensions de la surface : plus la surface est grande, plus grande devra être la distance entre le dispositif de métrologue et l'objet, afin de limiter la distorsion géométrique de la grille de mesure, et de compenser la distorsion en amont de la mesure.

Dans une deuxième sous-étape a2), on éclaire la surface avec le faisceau. On éclaire un point de la surface, qui va correspondre à un pixel de la cartographie de réflectivité. Pour ce point, on mesure une partie de l'amplitude/intensité lumineuse rétrodiffusée, également appelée grain de speckle.

. Plus cette valeur est élevée, moins le point est rugueux. La réflectivité du pixel est ainsi quantifiée par le dispositif de métrologie. Cette valeur est ensuite acquise et numérisée par un dispositif de conversion analogique numérique, par exemple une carte d'acquisition de données DAQ, ou un oscilloscope, avant d'être enregistrée sur ordinateur.

Le dispositif de conversion a de préférence une dynamique en amplitude suffisante, c'est-à-dire au moins avec seize bits de résolution.

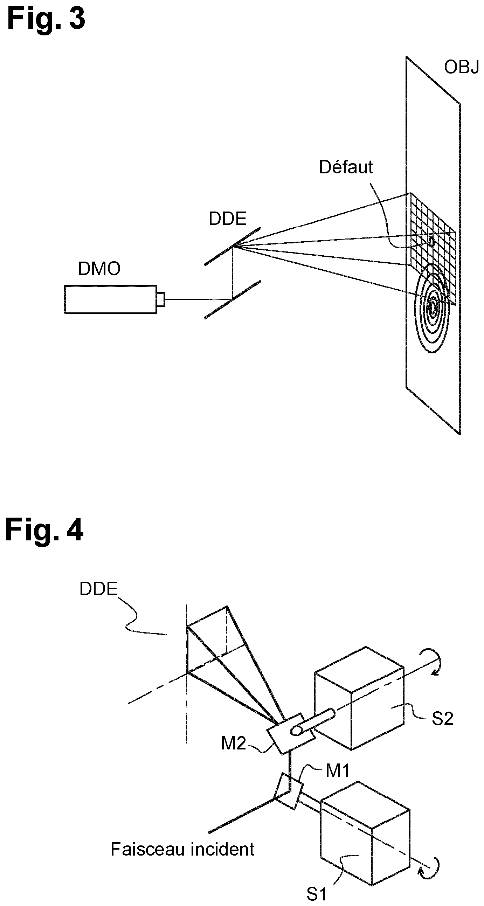

La deuxième sous étape a2) est répétée pour différents points de la surface. Pour cela, l'orientation du faisceau émis par le dispositif de métrologie est modifiée. En référence à la figure 3, le balayage de la surface de l'objet OBJ peut être opéré par un dispositif de déplacement DDE du point de mesure.

Le dispositif de déplacement DDE est avantageusement une tête galvanométrique, illustrée par la figure 4. La tête galvanométrique comprend un jeu de miroirs motorisés entraînés par des servomoteurs, qui permettent au dispositif de métrologie de mesurer la réflectivité spéculaire sur différents points de la surface, sans avoir besoin de déplacer le dispositif de métrologie.

La tête galvanométrique est constituée de deux miroirs M1, M2, qui ont la possibilité d'avoir une rotation de plusieurs degrés grâce aux deux servomoteurs S1, S2. Chacun des miroirs est commandé avec une très bonne répétabilité, en particulier inférieure à 15 µrad, et une très bonne précision angulaire, en particulier inférieure à 0,0008° ou 14 µrad. L'angle de rotation de ces miroirs dépend de la tension reçue. Pour chaque point de la surface pour lequel la rugosité doit être mesurée, le faisceau laser incident, émis par le dispositif de métrologie DMO est réfléchi par le premier miroir M1. Après cette réflexion, le laser rencontre le deuxième miroir M2, avant d'être projeté sur le point de mesure à la surface de l'objet OBJ. ou l'échantillon. La commande d'une tête galvanométrique est précise, dans la mesure où le déplacement en rotation d'un miroir et proportionnel à la tension appliquée, par exemple 0,5 V/°. La tête galvanométrique doit par ailleurs avoir une vitesse de déplacement comprise entre 100 Hz et 10 kHz, de préférence égale à 1 kHz, et avec une ouverture angulaire sensiblement égale à 20°.

La répétition de la deuxième sous étape a2) pour différents points de la surface est effectuée en commandant la rotation de l'un ou l'autre des miroirs, de façon ponctuelle : avant d'émettre le faisceau laser, on pivote l'un ou l'autre des miroirs. La rotation du miroir nécessite une période de stabilisation du miroir. Puis, une fois que le miroir est stabilisé, ou après un temps prédéterminé correspondant à la stabilisation du miroir, la mesure a lieu. Le faisceau laser est émis de façon continue et fournit des informations non pertinentes lorsque les miroirs ne sont pas stabilisés. L'acquisition, par exemple par l'oscilloscope, n'est synchronisée que pour effectuer les mesures lorsque les miroirs sont stabilisés. Le faisceau laser réfléchi par la surface passe aussi par le galvanomètre, afin de mesurer la réflectivité. Ainsi, avec le premier mode de réalisation, le dispositif de déplacement DDE est arrêté, pour chaque point de mesure.

L'opération de mesure est répétée pour tous les points de la surface, avec la résolution la plus fine possible, selon un trajet prédéterminé. La résolution est celle du dispositif de déplacement DDE. Pour une tête galvanométrique disponible dans le commerce, on peut obtenir une résolution égale à 0,0008°, ce qui correspond à des pixels espacés de quelques microns si le dispositif de métrologie est placé à quelques centimètres/décimètres de l'objet à fabriquer, dans le cadre d'un processus de fabrication additive d'une pièce mécanique, avec le dispositif de déplacement DDE disposé dans l'enceinte de fabrication additive. En dehors de ce cas d'intégration dans l'enceinte de fabrication additive, il est possible de travailler à plus d'un mètre de l'objet, de préférence de un à trois mètres, afin de limiter les effets de distorsion géométrique, et aussi pour scanner des surfaces présentant une géométrie complexe ou présentant des fortes courbures.

Si la résolution de la cartographie de réflectivité est grossière, la plupart des points ayant une réflectivité élevée risquent de ne pas être balayés, et très peu de points de mesure seront extraits. Cela peut toutefois être acceptable si on ne cherche à faire que quelques mesures ponctuelles.

Une alternative à la tête galvanométrique consisterait à déplacer mécaniquement le dispositif de métrologie à l'aide d'un banc cartésien (platine de translation motorisée ou bras robot), mais cette configuration est moins avantageuse en termes de durée de déplacement du point de mesure, de fonctionnalité et transportabilité du dispositif.

La tête galvanométrique offre l'avantage, par rapport aux autres solutions précitées, d'avoir un encombrement réduit, compatible avec des applications de contrôle d'intégrité dans des processus de fabrication additive. Par exemple, seule la tête galvanométrique pourrait être disposée à l'intérieur de machine de fabrication additive et le vibromètre placé à l'extérieur et en mesurant à travers une fenêtre optique. Les machines de fabrication additive, telles que les machines de fabrication sur lit de poudres SLM, disposent d'un espace interne relativement restreint, lequel permet l'ajout d'instrumentation à faible encombrement afin de mieux contrôler le processus. Alors, seul le dispositif de déplacement mécanique (tête galvanométrique) serait soumis aux conditions de fabrication et/ou d'inertage utilisé pour prévenir des effets d'oxydations au cours de la fabrication.

Avec le premier mode de réalisation, la cartographie de réflectivité est ainsi établie : chacune des positions du dispositif de déplacement DDE est enregistrée sur ordinateur, avec la réflectivité, qui représente le retour d'intensité rétrodiffusée. On peut donc associer une valeur de réflexion à chaque point balayé. Les positions du dispositif de déplacement DDE correspondent par exemple aux angles de rotation des miroirs de la tête galvanométrique, et donc aux coordonnées XYZ mesurées. Une échelle, par exemple de 0 à 100, permet de quantifier, de façon exploitable par l'utilisateur, la rugosité de chaque point. D'un point de vue interface utilisateur, la cartographie de réflectivité peut se présenter sous la forme d'une carte en deux dimensions, avec des niveaux de couleurs correspondant à l'échelle précitée. La cartographie peut également être présentée sous forme d'un tableau, qui met en correspondance la position du point sur la surface avec la réflectivité, par exemple dans l'échelle de 0 à 100.

Le dispositif de métrologie peut être équipé d'un autofocus qui permet de maximiser le retour de signal à chaque position spatiale. Cette option est particulièrement utile dans le cas où la distance entre l'objet et l'instrument de mesure n'est pas constante et permet de garantir que la valeur de retour signal mesurée en un point est obtenue dans des conditions optimales.

Selon un deuxième mode de réalisation, la première étape a) comprend une première sous-étape a1') d'agencement du dispositif de métrologie face à la surface de l'objet. Le positionnement du dispositif de métrologie est identique au premier mode de réalisation.

Dans une deuxième sous-étape a2'), l'orientation du faisceau incident est modifiée en continu, à savoir : le dispositif de métrologie émet un faisceau laser en continu, et le dispositif de déplacement DDE modifie en continu l'orientation du faisceau laser émis. Le dispositif de déplacement DDE oriente le faisceau laser selon un trajet de balayage prédéfini, permettant d'effectuer un balayage sans interruption. Avantageusement, un trajet en forme de méandres ou de créneau permet de balayer toute la surface sans interruption.

On recueille ainsi l'information de retour signal en continu, afin d'avoir une résolution spatiale bien supérieure au premier mode de réalisation. La surface peut être balayée sur un nombre quasiment infini de points. Le nombre de points ainsi recueillis dépend donc de la fréquence d'acquisition du retour signal et de la distance parcourue par le faisceau laser.

Compte tenu des performances actuelles des têtes galvanométriques, en mode point par point, on ne peut mesurer que quelques dizaines de points par seconde, représentant une distance centimétrique à décimétrique (en fonction des résolutions désirées). Entre deux points espacés d'un millimètre, la rugosité peut varier localement de manière conséquente, et donc même si les deux points ont une valeur de retour signal faible, il n'est pas impossible qu'un point à forte réflectivité se situe entre les deux et ait été raté. Cependant en faisant bouger le laser sonde de manière continue, on a la possibilité de mesurer des milliers de points par seconde avec une résolution spatiale beaucoup plus fine, et donc une probabilité bien plus grande de détecter des points à forte réflectivité, est donc une mesure locale du déplacement normal faiblement bruitée.

Le deuxième mode de réalisation est donc bien plus précis que le premier mode de réalisation.

Il est par ailleurs plus rapide, car il n'est pas nécessaire d'attendre une stabilisation du dispositif de déplacement DDE pour chaque point de mesure, en particulier une stabilisation des miroirs si le dispositif de déplacement DDE est une tête galvanométrique. Cependant, le deuxième mode de réalisation ne permet pas de mettre en œuvre l'autofocus. Il est à noter qu'il serait envisageable de préprogrammer la profondeur de champ du laser avec la distance focale prédit laser-objet, par exemple à partir des données de Conception Assistée par Ordinateur (CAO) de l'objet.

Pour établir ensuite la cartographie de réflectivité de la surface, on associe la position de chaque point à la valeur du retour signal. Si le dispositif de déplacement DDE est une tête galvanométrique, la position de chaque point est déterminée par les valeurs d'angles des miroirs après un étalonnage (ou calibration) du dispositif.

Comme pour le premier mode de réalisation, la réflectivité est enregistrée avec la position de chaque point. Ces données peuvent être restituées à l'utilisateur sous forme d'un diagramme en deux dimensions, représentant la réflectivité selon un code de couleur prédéterminé, la valeur pouvant être étalonnée entre 0 et 100 par exemple. En alternative, les données peuvent être présentées sous forme d'un tableau.

Comme l'illustre la figure 2, le procédé de caractérisation de l'intégrité d'un objet conforme à l'invention comprend une deuxième étape b) de sélection d'un ensemble des points de mesure, déterminé en fonction de la cartographie de réflectivité établie lors de l'étape a).

Par « ensemble de points de mesure », on entend une partie des points de mesure qui a été balayé lors de l'étape précédente.

La sélection de l'ensemble des points de mesure peut se faire de plusieurs façons.

Premièrement, l'ensemble de points de mesure peut correspondre à des points de la cartographie de réflectivité dont la réflectivité est supérieure à un seuil prédéfini. Lorsque les valeurs de réflectivité sont situées sur une échelle de 0 à 100, on peut par exemple déterminer que tous les points de mesure dont la réflectivité est supérieure à 80 feront partie de l'ensemble. Bien entendu, l'utilisateur peut modifier ce seuil, via une interface homme machine, par exemple via l'ordinateur auquel sont connectés tous les éléments du dispositif de métrologie DMO et le dispositif de déplacement DDE.

Deuxièmement, l'ensemble de points comprend les N points déterminés lors de l'étape a) ayant la partie de l'intensité lumineuse rétrodiffusée la plus élevée. L'ensemble comprend ainsi N points favorables. Le nombre de points N de l'ensemble peut également être paramétré par l'utilisateur. Le nombre N peut également être déterminé de façon à ce que l'ensemble comprenne une proportion donnée du nombre de points total de la cartographie de l'intensité rétrodiffusée.

Troisièmement, on peut combiner les deux méthodes précédemment décrites. Cela peut être le cas si une grande majorité des points de la surface ont une très bonne réflectivité (supérieure au seuil). Pour ne pas établir la cartographie des ondes élastiques sur tous ces points, notamment pour un gain de temps, on peut prendre, parmi ces points, les N points les plus réfléchissants, c'est-à-dire les points les plus brillants à cette longueur d'onde et cette incidence. A contrario, si les points retenus sont supérieurs à un seuil, mais que celui-ci est faible, on pourra retenir les N points les plus réfléchissants, parmi ceux supérieurs au seuil prédéfini.

Ces trois façons de sélection de l'ensemble de points sont compatibles avec les deux modes de réalisation de l'étape a), décrits précédemment (balayage point par point, ou balayage continu).

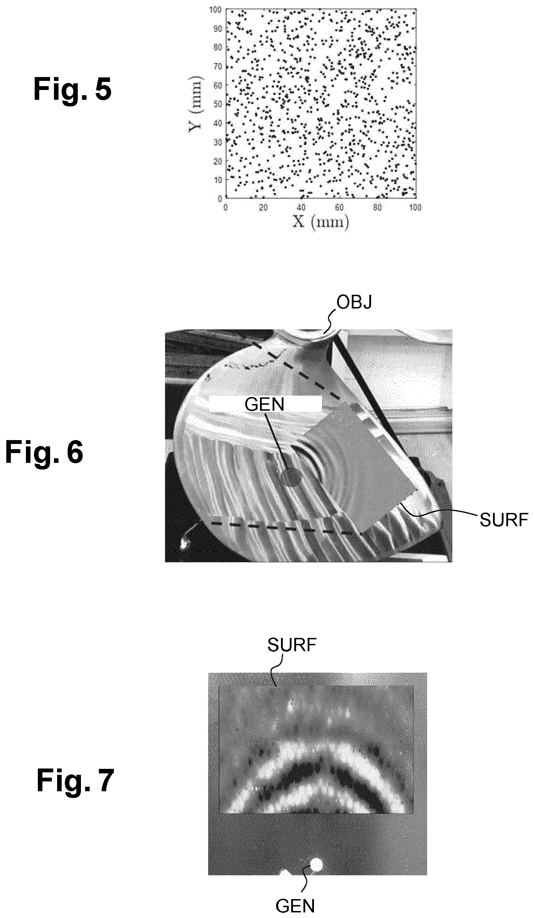

La figure 5 illustre un exemple d'ensemble de points de mesure obtenu suite à l'étape b) du procédé de caractérisation selon l'invention.

En complément, l'étape b) comprend l'application d'une interpolation spatiale. En effet, on peut s'attendre, suite à la sélection de l'ensemble, à une répartition spatiale aléatoire et/ou non uniforme de la cartographie de l'intensité rétrodiffusée. L'application d'une interpolation permet ainsi d'établir la cartographie des ondes élastiques (étape c) sur des points qui ne sont a priori pas favorables, afin de caractériser l'objet de façon uniforme.

Pour cela, on effectue un maillage de la surface de l'objet en plusieurs zones. Le nombre de zones, ainsi que leur répartition sur la surface de l'objet, est paramétrable via une interface homme machine. Il peut être envisagé d'effectuer un maillage uniforme de la surface, par exemple un quadrillage, ou tout autre type de segmentation (triangulaire, mixte, etc.).

Ainsi, dans la cartographie de réflectivité ou de sensibilité, chaque zone a un nombre prédéterminé de points ou une part prédéterminée de points par rapport au total de points de la cartographie de réflectivité. Par exemple, si l'utilisateur sait que, dans le cadre d'une fabrication additive d'un objet, des défauts se retrouvent souvent dans une région d'intérêt de l'objet, il pourra paramétrer la sélection de points pour faire en sorte que cette zone soit suffisamment représentée (raffinée), au niveau de l'ensemble de points de mesure sélectionné.

L'application de la fonction d'interpolation des points peut être effectuée sur un ensemble de points déterminé selon l'une ou l'autre des variantes précitées (points supérieurs à un seuil, N points les plus favorables, ou la combinaison des deux).

Un tel procédé d'interpolation est notamment décrit dans la demande de brevet PCT/EP2019/072136.

L'étape c) du procédé comprend, pour les points de mesure de l'ensemble déterminé lors de l'étape b), l'émission d'un faisceau laser, la réception du faisceau laser suite à sa réflexion sur chacun des points de mesure, et la mesure de l'effet Doppler dû à la différence de fréquence entre le faisceau émis et le faisceau réfléchi provoqué par la propagation des ondes élastiques dans l'objet OBJ, c'est-à-dire la mesure du déplacement normal.

L'étape c) est avantageusement mise en œuvre avec le même dispositif de métrologie optique DMO et avec le même dispositif de déplacement DDE, ce qui permet d'éviter une étape de recalage entre les données de la cartographie de réflectivité et la cartographie des ondes élastiques. Par ailleurs, l'utilisation des mêmes composants procure un gain de place du système global.

On peut ainsi établir une cartographie des ondes élastiques se propageant dans l'objet, comme illustré sur les figures 6 et 7. La figure 6 représente un objet OBJ, en l'occurrence l'hélice d'un bateau, ainsi qu'une surface SURF de l'objet OBJ. La surface SURF est balayée d'abord dans le cadre de l'établissement de la cartographie de réflectivité. Puis, certains des points de cette surface SURF seront analysés pour établir la cartographie des ondes élastiques. Afin de générer une propagation des ondes élastiques dans l'objet OBJ, un ou plusieurs générateurs d'ondes ultrasonores GEN, par exemple des transducteurs piézoélectriques, peuvent être disposés sur l'objet OBJ. Le signal émis par le générateur d'ondes ultrasonores GEN peut être par exemple un signal sinusoïdal (monochromatique) auquel une modulation d'amplitude est appliquée ou une impulsion ou un train d'ondes.

Comme on peut le voir sur la figure 6 et sur la figure 7, qui représente une vue détaillée de la surface SURF de la figure 6, lorsqu'une onde ultrasonore (ou mode) rencontre un défaut, et que celui-ci a des dimensions proches ou supérieures à la longueur d'onde acoustique équivalente du mode, alors la propagation en est affectée, se traduisant par des phénomènes de diffraction, d'atténuation, de résonance (due aux ondes circonférentielles ou de cavités), et engendrant aussi des conversions de modes (L vers T et réciproquement, ondes évanescentes, circonférentielle dans certains cas). D'autres méthodes d'analyses permettent de déduire les informations du défaut à partir des ondes réfléchies ou diffractées par le défaut, par exemple des méthodes de tomographie acoustique employées en Contrôle de Santé Intégré (ou SHM pour Structural Health Monitoring).

Grâce au procédé selon l'invention, la qualité de la cartographie des ondes élastiques (également appelée « wavefield » selon la terminologie anglo-saxonne) est améliorée, car la mesure n'est effectuée que sur des points ayant la meilleure réflectivité. Par ailleurs, l'établissement de la cartographie est plus rapide, car elle est effectuée sur moins de points.

On peut également, lors de l'étape c), effectuer les mesures sur des points qui ne font pas partie de l'ensemble de points de mesure déterminé lors de l'étape b).

En effet, l'étape a) permet d'identifier un certain nombre de points ayant une forte rugosité. Si la cartographie des ondes élastiques devait être établie également sur ces points, il conviendrait de limiter leur impact sur la cartographie des ondes élastiques, en effectuant une compensation en amplitude de la cartographie (CSCAN) en fonction de la carte de réflectivité obtenue à l'étape a).

L'invention se rapporte aussi à un procédé de fabrication additive d'un objet, comprenant les étapes suivantes :
- dépôt de couches successives de matière ;
- suite au dépôt d'un nombre prédéterminé de couches, caractérisation de l'objet conformément au procédé précité, dans lequel une contrainte mécanique, thermique ou thermoélastique externe à l'objet est appliquée à l'objet dans l'étape c).

Il s'agit donc d'un fonctionnement en mode actif car la contrainte est externe à l'objet, comme indiqué précédemment.

Il est ainsi possible d'inspecter sans contact une pièce en cours de fabrication, même si sa surface est rugueuse. On choisira alors les points les plus réfléchissants. Etant donné que la méthode de caractérisation est rapide (il y a moins de points de mesure que dans les procédés connus de caractérisation), elle peut être mise en œuvre en temps réel, durant la fabrication de l'objet. Si un défaut est détecté, le procédé de fabrication peut ainsi être adapté ou arrêté pour réparer l'objet.

La compacité du système composé du vibromètre et de la tête galvanométrique rend possible son intégration aux côtés de système de fabrication additive.

Le procédé peut également être mis en œuvre après le polissage de l'objet.

L'invention est par ailleurs particulièrement adaptée aux mesures d'émission acoustique, en particulier lors de la fabrication additive. L'invention se rapporte pour cela à un procédé de fabrication additive d'un objet, comprenant les étapes suivantes :
- dépôts de couches successives de matière ;
- suite au dépôt d'un nombre prédéterminé de couches, caractérisation de l'objet conformément au procédé précité, dans lequel une contrainte thermique, thermoélastique ou mécanique interne à l'objet est détectée.

Il s'agit donc d'un fonctionnement en mode passif car la contrainte est interne à l'objet, comme indiqué précédemment.

Les signaux d'émission acoustique sont engendrés lors d'une fissuration, d'un relâchement de contraintes résiduelles, d'une mauvaise fusion, lors du processus de solidification, etc. Ces effets vont libérer localement une énergie et engendrer des ondes élastiques transitoires, qui peuvent être guidées si l'on a affaire à des interfaces aux parois minces, et d'amplitude plus ou moins élevées en fonction de la nature et la source de l'événement.

La qualité des mesures est d'autant plus importante en émission acoustique, que la mesure de cette vibration, due par exemple à la propagation d'une fissure, ne se produit que de façon ponctuelle.

Lorsqu'une contrainte mécanique interne à l'objet est détectée, on peut dès lors effectuer caractériser l'intégrité de l'objet de façon non destructive, et en se passant de transducteur piézoélectrique, ce qui est particulièrement avantageux en fabrication additive. En effet, le transducteur piézoélectrique est habituellement disposé sous le substrat sur laquelle l'objet est fabriqué. Lors de l'empilement des premières couches, le transducteur piézoélectrique est relativement proche des couches supérieures, la propagation de l'onde est facile à interpréter. Par contre, au fur et à mesure de l'augmentation de la taille de l'objet, la distance de propagation augmente, l'onde est plus atténuée et diffractée, ce qui dégrade la sensibilité de la mesure à détecter un défaut. En mettant en œuvre une méthode d'émission acoustique, la détection des défauts est effectuée au plus près de la couche supérieure ou proche du bain de fusion.

## Revendications

1. Procédé de caractérisation de l'intégrité d'un objet (OBJ) soumis à une contrainte mécanique, thermique ou thermoélastique susceptible de générer des ondes élastiques dans l'objet (OBJ), comprenant les étapes suivantes et dans cet ordre :
a) établissement d'une cartographie de réflectivité d'une surface de l'objet (OBJ), comprenant les sous-étapes suivantes :
a1') agencement d'un dispositif de métrologie optique (DMO) face à la surface de l'objet, le dispositif de métrologie étant configuré pour générer un faisceau laser incident et pour mesurer un retour dudit faisceau laser incident après réflexion et diffraction ;
a2') en modifiant de façon continue, à l'aide d'un dispositif de déplacement (DDE) comprenant un jeu de miroirs motorisés entraînés par des servomoteurs, l'orientation du faisceau incident selon un trajet de balayage prédéfini, éclairer la surface avec le faisceau et mesurer en continu la réflectivité de la surface, la cartographie de réflectivité correspondant à la réflectivité diffuse de la surface sur le trajet de balayage ;
b) sélection d'un ensemble des points de mesure, déterminé en fonction de la cartographie de réflectivité, l'ensemble de points de mesure correspondant à des points de la cartographie de réflectivité dont une partie de l'intensité lumineuse rétrodiffusée est supérieure à un seuil prédéfini, et/ou correspondant à N points ayant une partie de l'intensité lumineuse rétrodiffusée la plus élevée parmi les points de la cartographie de réflectivité, N étant un entier prédéfini ;
c) émission d'un faisceau laser au moins sur les points de mesure dudit ensemble, réception du faisceau laser suite à sa réflexion sur chacun des points de mesure, et mesure de l'effet Doppler dû à la différence de fréquence entre le faisceau émis et le faisceau réfléchi provoqué par la propagation des ondes élastiques dans l'objet (OBJ), de façon à établir une cartographie des ondes élastiques se propageant dans l'objet.

2. Procédé selon la revendication 1, dans lequel, la surface étant maillée en une pluralité de zones, l'étape b) comprend l'application d'une fonction d'interpolation, de façon à ce que, dans la cartographie de réflectivité, chaque zone ait un nombre prédéterminé de points ou une part prédéterminée de points par rapport au total de points de la cartographie de réflectivité.

3. Procédé selon l'une des revendications précédentes, dans lequel, dans l'étape c), la cartographie des ondes élastiques est complétée par interpolation, l'interpolation étant configurée pour augmenter la discrétisation spatiale de la cartographie des ondes élastiques.

4. Procédé selon l'une des revendications 1 ou 2, dans lequel, dans l'étape c), un faisceau laser est émis sur des points de la surface qui n'appartiennent pas à l'ensemble de points sélectionnés lors de l'étape b), la cartographie des ondes élastiques se propageant dans l'objet étant corrigée, pour lesdits points de la surface, par une compensation en amplitude inversement proportionnelle à la réflectivité déterminée lors de l'étape a).

5. Système configuré pour la caractérisation de l'intégrité d'un objet (OBJ) soumis à une contrainte mécanique, thermique ou thermoélastique susceptible de générer des ondes élastiques dans l'objet (OBJ), comprenant :
- un dispositif de métrologie optique (DMO), configuré pour mesurer une vibration dans un objet (OBJ) à caractériser, et configuré en outre pour générer un faisceau laser incident sur un point de mesure d'un objet à caractériser et pour numériser et quantifier un retour dudit faisceau laser incident après réflexion sur ledit point de mesure ;
- un dispositif de déplacement (DDE) du point de mesure sur la surface de l'objet ;
- un ordinateur adapté pour exécuter les étapes du procédé selon l'une des revendications précédentes.

6. Système selon la revendication 5, dans lequel le dispositif de métrologie optique (DMO) comprend un vibromètre laser à effet Doppler.

7. Système selon l'une des revendications 5 ou 6, dans lequel le dispositif de déplacement du point de mesure (DDE) comprend une tête galvanométrique, disposée entre le dispositif de métrologie optique (DMO) et l'objet (OBJ).

8. Système selon la revendication 7, dans lequel la tête galvanométrique a une répétabilité inférieure à 15 µrad.

9. Procédé de fabrication additive d'un objet, **caractérisé en ce qu'**il comprend les étapes suivantes :
- dépôt de couches successives de matière ;
- suite au dépôt d'un nombre prédéterminé de couches, caractérisation de l'objet conformément au procédé selon l'une des revendications 1 à 4, dans lequel une contrainte mécanique, thermique ou thermoélastique externe à l'objet est appliquée à l'objet dans l'étape c).

10. Procédé de fabrication additive d'un objet, **caractérisé en ce qu'**il comprend les étapes suivantes :
- dépôt de couches successives de matière ;
- suite au dépôt d'un nombre prédéterminé de couches, caractérisation de l'objet conformément au procédé selon l'une des revendications 1 à 4, dans lequel un signal ultrasonore issue d'une variation de contrainte mécanique, thermique ou thermoélastique interne à l'objet est détectée.

## Patentansprüche

1. Verfahren zum Charakterisieren der Integrität eines Objekts (OBJ), das einer mechanischen, thermischen oder thermoelastischen Belastung ausgesetzt ist, das geeignet ist, elastische Wellen in dem Objekt (OBJ) zu erzeugen, umfassend die folgenden Schritte, und in dieser Reihenfolge:
a) Aufbauen einer Reflektivitätskartografie einer Oberfläche des Objekts (OBJ), umfassend die folgenden Teilschritte:
a1') Anordnen einer optischen Messtechnikvorrichtung (DMO) gegenüber der Oberfläche des Objekts, wobei die Messtechnikvorrichtung konfiguriert ist, um einen einfallenden Laserstrahl zu erzeugen, und um eine Rückführung des einfallenden Laserstrahls nach Reflexion und Beugung zu messen;
a2') durch kontinuierliches Modifizieren mithilfe einer Verschiebevorrichtung (DDE), die einen Satz von motorisierten Spiegeln umfasst, die von Servomotoren angetrieben werden, der Ausrichtung des einfallenden Strahls entlang eines vordefinierten Abtastweges, Beleuchten der Oberfläche mit dem Strahl und kontinuierliches Messen der Reflektivität der Oberfläche, wobei die Reflektivitätskartografie der diffusen Reflektivität der Oberfläche auf dem Abtastweg entspricht;
b) Auswählen einer Anordnung von Messpunkten, die in Abhängigkeit von der Reflektivitätskartografie bestimmt wird, wobei die Anordnung von Messpunkten Punkten der Reflektivitätskartografie entspricht, von denen ein Teil der rückgestreuten Leuchtstärke größer als eine vordefinierte Schwelle ist, und/oder N Punkten entspricht, die einen Teil der größten rückgestreuten Leuchtstärke unter den Punkten der Reflektivitätskartografie aufweist, wobei N eine vordefinierte ganze Zahl ist;
c) Senden eines Laserstrahls mindestens auf die Messpunkte der Anordnung, Empfangen des Laserstrahls nach dessen Reflexion auf jedem der Messpunkte, und Messen des Doppler-Effekts aufgrund des Frequenzunterschieds zwischen dem ausgesendeten Strahl und dem reflektierten Strahl, der durch die Ausbreitung der elastischen Wellen im Objekt (OBJ), um eine Kartografie der elastischen Wellen aufzubauen, die sich in dem Objekt ausbreiten.

2. Verfahren nach Anspruch 1, wobei, der Schritt b), da die Oberfläche in einer Vielzahl von Zonen vermascht ist, die Anwendung einer Interpolationsfunuktion umfasst, sodass jede Zone in der Reflektivitätskartografie eine vorbestimmte Anzahl an Punkten oder einen vorbestimmten Teil von Punkten in Bezug auf die Gesamtheit von Punkten der Reflektivitätskartografie umfasst.

3. Verfahren nach einem der vorstehenden Ansprüche, wobei die Kartografie der elastischen Wellen im Schritt c) durch Interpolation vervollständigt wird, wobei die Interpolation konfiguriert ist, um die räumliche Diskretisierung der Kartografie der elastischen Wellen zu erhöhen.

4. Verfahren nach einem der Ansprüche 1 oder 2, wobei ein Laserstrahl im Schritt c) auf Punkte der Oberfläche ausgegeben wird, die nicht der Gesamtheit an ausgewählten Punkten im Schritt b) angehören, wobei die Kartografie der elastischen Wellen, die sich im Objekt ausbreiten, für die Punkte der Oberfläche durch eine Amplitudenkompensation umgekehrt proportional zu der im Schritt a) bestimmten Reflektivität korrigiert wird.

5. System, das zum Charakterisieren der Integrität eines Objekts (OBJ) konfiguriert ist, das einer mechanischen, thermischen oder thermoelastischen Belastung ausgesetzt ist, das geeignet ist, elastische Wellen in dem Objekt (OBJ) zu erzeugen, umfassend:
- eine optische Messtechnikvorrichtung (DMO), die konfiguriert ist, um eine Schwingung in einem zu charakterisierenden Objekt (OBJ) zu messen, und weiter konfiguriert ist, um einen einfallenden Laserstrahl auf einen Messpunkt eines zu charakterisierenden Objekts zu erzeugen und um eine Rückführung des einfallenden Laserstrahls nach Reflexion auf dem Messpunkt zu digitalisieren und zu quantifizieren;
- eine Verschiebevorrichtung (DDE) des Messpunkts auf der Oberfläche des Objekts;
- einen Computer, der angepasst ist, um die Schritte des Verfahrens nach einem der vorstehenden Ansprüche auszuführen.

6. System nach Anspruch 5, wobei die optische Messtechnikvorrichtung (DMO) einen Laser-Doppler-Vibrometer umfasst.

7. System nach einem der Ansprüche 5 oder 6, wobei die Verschiebevorrichtung des Messpunktes (DDE) einen galvanometrischen Kopf umfasst, der zwischen der optischen Messtechnikvorrichtung (DMO) und dem Objekt (OBJ) angeordnet ist.

8. System nach Anspruch 7, wobei der galvanometrische Kopf eine Wiederholbarkeit von weniger als 15 µrad aufweist.

9. Verfahren zur additiven Fertigung eines Objekts, **dadurch gekennzeichnet, dass** es die folgenden Schritte umfasst:
- Abscheiden von aufeinanderfolgenden Materialschichten;
- nach dem Abscheiden einer vorbestimmten Anzahl an Schichten, Charakterisieren des Objekts entsprechend dem Verfahren nach einem der Ansprüche 1 bis 4, wobei eine mechanische, thermische oder thermoelastische Belastung außerhalb des Objekts an das Objekt in Schritt c) angelegt wird.

10. Verfahren zur additiven Fertigung eines Objekts, **dadurch gekennzeichnet, dass** es die folgenden Schritte umfasst:
- Abscheiden von aufeinanderfolgenden Materialschichten;
- nach dem Abscheiden einer vorbestimmten Anzahl an Schichten, Charakterisieren des Objekts entsprechend dem Verfahren nach einem der Ansprüche 1 bis 4, wobei ein aus einer Variation einer mechanischen, thermischen oder thermoelastischen Belastung innerhalb des Objekts stammendes Ultraschallsignal erkannt wird.

## Claims

1. Method for characterising the integrity of an object (OBJ) subjected to a mechanical, thermal or thermoelastic stress liable to generate elastic waves in the object (OBJ), comprising the following steps and in this order:
a) establishing a map of the reflectivity of a surface of the object (OBJ), comprising the following substeps:
a1') arranging an optical metrology device (DMO) opposite the surface of the object, the metrology device being configured to generate an incident laser beam and to measure a return of said incident laser beam after reflection and diffraction;
a2') by continuously modifying, using a displacement device (DDE) comprising a set of motorised mirrors driven by servomotors, orienting the incident beam along a predefined scanning path, illuminating the surface with the beam and continuously measuring the reflectivity of the surface, the reflectivity map corresponding to the reflectivity diffuses from the surface over the scanning path;
b) selecting a set of measurement points, which set is determined depending on the reflectivity map, the set of measurement points corresponding to points of the reflectivity map, some of the backscattered light intensity of which is greater than a predefined threshold, and/or corresponding to N points having some of the backscattered light intensity greater among the points of the reflectivity map, N being a predefined integer;
c) transmitting a laser beam at least to the measurement points of said set, receiving the laser beam following its reflection from each of the measurement points, and measuring the Doppler effect due to the frequency difference between the transmitted beam and the reflected beam caused by the propagation of elastic waves in the object (OBJ), so as to establish a map of the elastic waves propagating through the object.

2. Method according to claim 1, wherein, the surface being meshed in a plurality of zones, step b) comprises the application of an interpolation function, such that, in the reflectivity map, each zone has a predetermined number of points or a predetermined share of points with respect to the total points of the reflectivity map.

3. Method according to any one of the preceding claims, wherein, in step c), the map of the elastic waves is completed by interpolation, the interpolation being configured to increase the spatial discretisation of the map of elastic waves.

4. Method according to any one of claims 1 or 2, wherein, in step c), a laser beam is transmitted on points of the surface which do not belong to the set of points selected during step b), the map of the elastic waves propagating through the object being corrected, for said points of the surface, by an amplitude compensation, inversely proportional to the reflectivity determined during step a).

5. System configured for the characterisation of the integrity of an object (OBJ) subjected to a mechanical, thermal or thermoelastic stress liable to generate elastic waves in the object (OBJ), comprising:
- an optical metrology device (DMO), configured to measure a vibration in an object (OBJ) to be characterised, and further configured to generate an incident laser beam on a measurement point of an object to be characterised and to digitise and quantify a return of said incident laser beam after reflection on said measurement point;
- a device (DDE) for displacing the measurement point on the surface of the object;
- a computer suitable for executing the steps of the method according to any one of the preceding claims.

6. System according to claim 5, wherein the optical metrology device (DMO) comprises a Doppler effect laser vibrometer.

7. System according to any one of claims 5 or 6, wherein the device for displacing the measurement point (DDE) comprises a galvanometric head, disposed between the optical metrology device (DMO) and the object (OBJ).

8. System according to claim 7, wherein the galvanometric head has a repeatability less than 15µrad.

9. Method for the additive manufacture of an object, **characterised in that** it comprises the following steps:
- depositing successive material layers;
- following the deposition of a predetermined number of layers, characterising the object according to the method according to any one of claims 1 to 4, wherein a mechanical, thermal or thermoelastic stress external to the object is applied to the object in step c).

10. Method for the additive manufacture of an object, **characterised in that** it comprises the following steps:
- depositing successive material layers;
- following the deposition of a predetermined number of layers, characterising the object according to the method according to any one of claims 1 to 4, wherein an ultrasonic signal from a variation of mechanical, thermal or thermoelastic stress internal to the object is detected.
